(19) Europäisches Patentamt
European Patent Office
Office européen des brevets

(11) **EP 4 506 765 B1**

## (12) EUROPÄISCHE PATENTSCHRIFT

(45) Veröffentlichungstag und Bekanntmachung des Hinweises auf die Patenterteilung:
**24.09.2025 Patentblatt 2025/39**

(21) Anmeldenummer: **23190070.5**

(22) Anmeldetag: **07.08.2023**

(51) Internationale Patentklassifikation (IPC):
***G05B 19/042*** *(2006.01)*

(52) Gemeinsame Patentklassifikation (CPC):
**G05B 19/0423**

(54) **MODUL ZUR SEQUENZIELLEN DATENERFASSUNG MIT INTEGRIERTER KI-AUSWERTUNG**

SEQUENTIAL DATA ACQUISITION MODULE WITH INTEGRATED AI EVALUATION

MODULE D'ACQUISITION SÉQUENTIELLE DE DONNÉES AVEC ÉVALUATION D'IA INTÉGRÉE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**12.02.2025 Patentblatt 2025/07**

(73) Patentinhaber: **Siemens Aktiengesellschaft 80333 München (DE)**

(72) Erfinder:
• **Gabriel, Gino
09236 Geringswalde (DE)**
• **Mauersberger, Max André
09221 Neukirchen/Erzgebirge (DE)**

(74) Vertreter: **Siemens Patent Attorneys
Postfach 22 16 34
80506 München (DE)**

(56) Entgegenhaltungen:
DE-A1- 102021 210 298    US-A1- 2021 263 493
US-B2- 11 445 951

**Beschreibung**

Die Erfindung betrifft ein Modul ausgebildet zur sequenziellen Datenerfassung mit integrierter KI-Auswertung umfassend eine Messeinheit ausgestaltet über einen Sensor von einem Testobjekt Messwerte aufzunehmen, einen KI-Microcontroller ausgestaltet einen KI-Algorithmus aufzunehmen und abzuarbeiten, einen Datenspeicher, einen Betriebssystembaustein, weiterhin ausgestaltet für eine modulare Aufbauweise in einem Automatisierungssystem Daten über einen Rückwandbus an eine übergeordnete Einheit weiterzuleiten.

Da die KI-Technologie (künstliche Intelligenz, auch als maschinelle Intelligenz bekannt) immer zuverlässiger wird und Anwendungen in industriellen Systemen immer häufiger eingesetzt werden, besteht ein Bedarf an industrieller KI-Ausrüstung. Herkömmliche Automatisierungsgeräte wie speicherprogrammierbare Steuerungen (auch SPS genannt) verfügen nicht über die für die KI-Technologie erforderliche Rechenleistung. Cloud-basierte KI-Lösungen sind verfügbar, lassen sich jedoch nicht einfach für Shopfloor-Lösungen implementieren, das heißt, die Ergebnisse einer Cloud-basierten KI-Lösung sind möglicherweise nicht ohne weiteres im Shopfloor verfügbar.

Der Trend bei Automatisierungssystemen im Zuge der fortschreitenden Digitalisierung geht zunehmend in Richtung größerer Datenmengen. Eine Ursache für diesen Anstieg ist die Integration von Verfahren, welche die Qualität der Produkte im Prozess überwachen und sichern sollen. Die Impedanzspektroskopie ist ein Messverfahren, welches es ermöglicht, physikalische Phänomene zu beschreiben, die sich sonst mit keinem einfachen zusammenhängenden mathematischen Modell darstellen lassen. Die Interpretation der daraus resultierenden hohen Datenmenge ist jedoch nicht trivial, weswegen eine erfahrungsbasierte Auswertung mittels künstlicher Intelligenz eine Lösung bietet. Gegenwärtig ist der Trend dahingehend, KIbasierte Operationen in der Cloud durchzuführen. Dafür müssen die Daten von der Quelle über den Rückwandbus, die CPU, das übergeordnete Leitsystem an die Cloud übertragen werden. Dort werden sie ausgewertet und auf demselben Weg zurückgesendet. Die dabei entstehende Belastung für den Rückwandbus ist enorm, da dieser für eine solche Datenmenge nicht konzipiert ist. Eine Verlagerung der Analyse, in die der Datenquelle nächste dezentrale Peripherie reduziert den Kommunikationsaufwand auf ein Minimum und sichert zusätzlich dem Anwender die Datenhoheit.

Die US 2021/263493 A zeigt ein Modul gemäß dem Oberbegriff des Anspruchs 1.

Die DE 10 2021 210298 A1 zeigt eine Batteriezellen-Messeinheit, die mit einer KI zusammenwirkt, wobei verschiedene Messparameter vorgebbar sind.

Die US 2021/263493 A1 zeigt ein Modul, welches zur sequenziellen Datenerfassung mit integrierter KI-Auswertung ausgebildet ist, umfassend eine Messeinheit, die ausgestaltet ist, über einen Sensor von einem Testobjekt Messwerte aufzunehmen sowie einen KI-Microcontroller, der ausgestaltet ist, einen KI-Algorithmus aufzunehmen und damit die Messwerte abzuarbeiten.

Es ist demnach eine Aufgabe der vorliegenden Erfindung, ein Modul, insbesondere für die Automatisierungstechnik, bereitzustellen, welches einem Anwender erlaubt für seine Prozesse spezifischen Bedürfnisse aufgenommene Messdaten vor Ort mithilfe von KI-Netzwerken bzw. Neuronalen Netzwerken auszuwerten, ohne einen Cloud-Dienst zu nutzen.

Die Aufgabe wird durch ein Modul nach Anspruch 1 gelöst, also dadurch, dass die Messeinheit ausgestaltet ist eine Messvorschrift mit zumindest folgenden Messparametern entgegenzunehmen: Eine Art der Messung, eine Anzahl der gewünschten Messungen, weiterhin ausgestaltet gemäß der vorgegebenen Art der Messung die Anzahl der Messungen hintereinander durchzuführen und eine Messreihe aufzunehmen, wobei der KI-Microcontroller ausgestaltet ist zyklisch beginnend mit einer ersten Messreihe diese von der Messeinheit abzuholen und in einem Array zu speichern, weiterhin ist der KI-Microcontroller ausgestaltet den KI-Algorithmus auf die Messwerte der ersten Messreihe anzuwenden und das Ergebnis mittels des Betriebssystembaustein über den Rückwandbus auszugeben, weiterhin ausgestaltet nach Auswertung der ersten Messreihe eine weitere Messreihe aus dem Array mit dem KI-Algorithmus auszuwerten.

Erfindungsgemäß ist nun eine frei programmierbare Messeinheit und ein frei programmierbarer KI-Microcontroller, nämlich die KI-Auswertung, in ein Modul, insbesondere in ein Peripheriemodul für eine modulare aufbauweise von beispielsweise dezentralen Peripheriemodulen, integriert. Ein Anwender hat nun die Möglichkeit seine Messeinheit beispielsweise für eine Körperschallmessung oder eine Schwingungsmessung oder eine Impedanzspektroskopie zu parametrieren und die aufgenommenen Ergebnisse direkt einer Auswertung mittels KI-Algorithmen zuzuführen.

Alle Daten können jetzt Vorverarbeitet werden und es kann zur Datenentlastung nur noch das Ergebnis übermittelt werden z.B. eine Klassifizierung, welche aus der Messreihe gewonnen wurde. Mit dem Modul kann insbesondere in der Automatisierungstechnik eine Echtzeitfähigkeit der Hauptsteuerung garantiert werden, denn durch die die Entlastung des Ruckwandbus wird auch die Hauptsteuerung entlastet und somit ergibt sich im Ganzen eine geringe Latenzzeit.

Ein weiterer Vorteil eines solchen Moduls besteht in der Anpassungsfähigkeit des Moduls an verschiedenste Anwendungsfälle und damit ergibt sich wiederum eine Vereinfachung für einen Inbetriebsetzer bzw. selbstverständlicher Weise eine Inbetriebsetzerin. Es existiert jetzt eine einheitliche Hardware, welche mit entsprechender Parametrierung und angepassten neuronalen Netzen fertigungstechnische Aufgaben lösen kann.

Im Sinne der Erfindung bilden neuronale Netze, also künstliche neuronale Netze, Neuronenstrukturen mit erlerntem Wissen ab. Aus dem Bereich der künstlichen Intelligenz gibt es ein Knowledge discovery in data base Verfahren, welches oft auch als data mining bezeichnet wird. Aus diesem Data Mining leitet sich der generelle Anspruch ab, unbekannte Zusammenhänge aus meist sehr großen Datenbeständen zu entdecken. Dabei werden die verwendeten Algorithmen verschieden betrieben, also ohne Vorgabe expliziter Ergebniserwartungen, die Datenbestände zu analysieren. Bei überwachten Lernverfahren wie der Klassifizierung wird ein bestimmtes Ergebnis erwartet. Abweichungen können mit auf das Modell trainiert werden, so dass es robuster reagiert auf starke Schwankungen. Wie auf Schwankungen reagiert wird ist abhängig vom Algorithmus, dessen Parametern und mit welchen Daten er trainiert wurde. Insbesondere Materialien bei der automatisierungstechnischen Fertigung unterliegen herstellungs- bzw. chargenbedingten Schwankungen.

In dem Modul ist die Messeinheit und der KI-Microcontroller mit Vorteil ausgestaltet mittels einer Engineering Station für die jeweilige Art der Messung parametriert zu werden und dann für eine Körperschallmessung, eine Schwingungsmessung oder eine Impedanzmessung parametriert ist.

Speziell bei einer Parametrierung für eine Impedanzmessung ist die Messeinheit dann als eine Impedanzmesseinheit ausgestaltet und kann so mit einem elektrischen Prüfsignal eine von einer Frequenz und/oder einer Amplitude des Prüfsignals abhängige Messreihe bzw. ein Impedanzspektrum über den Sensor von dem Testobjekt aufnehmen, dabei ist die Impedanzmesseinheit ausgestaltet mittels der Messvorschrift mit einer Startfrequenz zu beginnen und mit einer Stoppfrequenz die Messung ein letztes Mal durchzuführen um eine Anzahl der gewünschten Messungen aufzunehmen.

Dies hat den Vorteil einer gleichmäßigen Verteilung der Frequenzen auf das ganze Messfrequenzband. Um den Messbereich bei einer ratiometrischen Messung zu vergrößern, werden wahlweise vier Kalibrierwiderstände durch eine Multiplexer Impedanzmesseinheit zugeschaltet. Nach Abschluss einer Messung mit einer bestimmten Frequenz wird nach folgender Formel die nächste Frequenz berechnet. Diese ist dann auch entsprechend der Parametrierung in der Messeinheit oder in dem Microcontroller implementiert.

$$ f_{neu} = 10^{k \cdot \frac{log\left(\frac{f_{stop}}{f_{start}}\right)}{K-1}} $$

Mit:

K - Gesamtanzahl der Messungen
k - Index der aktuellen Messung

Ebenso ist in der Messeinheit oder in dem Microcontroller implementiert, dass ein Multiplexer entsprechend gesteuert wird, wobei die Impedanzmesseinheit oder der KI-Microcontroller ausgestaltet ist beginnend mit einem Wert eines Kalibrierwiderstandes die Messung durchzuführen und die gemessenen Daten auszuwerten, dabei wird verglichen, ob die gemessene Impedanz kleiner als 80% des Kalibrierwiderstandes ist, sollte dies so sein, wird der Multiplexer den nächst kleineren Kalibrierwiderstand zuschalten.

Hiermit kann man nun gleichermaßen den unbekannten Prüfling und einen bekannten Referenzwiderstand mit demselben Signal beaufschlagen. Bei dieser Widerstandsmessung mit Referenzwiderstand wird der unbekannte Widerstand also die Impedanz mit Hilfe der Spannungsabfälle an dem zu messenden Widerstand und dem Referenzwiderstand mit einem Spannungsmesser ermittelt. Da der Referenzwiderstand bekannt ist, kann der unbekannte Widerstand aus dem Verhältnis der Spannungen multipliziert mit dem Referenzwiderstand ermittelt werden. Eine daraus entstehende Verhältnisgleichung kann in C-Code repräsentiert werden und dient der Berechnung der unbekannten Impedanz des Prüflings. Bedingt durch dieses Messverfahren leidet die Genauigkeit der Messung extrem unter einer zu großen Differenz zwischen Kalibrierwiderstand und der Impedanz des Prüflings. Deshalb werden nach jeder Frequenz des Messsignals die gemessenen Daten ausgewertet. Dabei wird verglichen, ob die gemessene Impedanz kleiner als 80% des Referenzwiderstands ist. Sollte dies so sein, wird der Microcontroller mittels Multiplexer den nächstkleineren Referenzwiderstand zuschalten und die Messung wird wiederholt.

Insbesondere bei der Impedanzmessung hat sich im Hinblick auf eine Genauigkeit ein verblüffender Effekt eingestellt, denn wenn der KI-Microcontroller ausgestaltet ist den KI-Algorithmus auf einen Imaginärteil der Messwerte der Messreihen anzuwenden, gelingt es besonders genaue Ergebnisse bzw. Klassifizierungen mit dem KI-Algorithmus zu erreichen. Die Messeinheit kann so parametriert werden, dass sie die physikalischen Größen: Amplitude, Phase, Realteil, Imaginärteil und Verlustfaktor misst. Somit kann jede Messreihe maximal fünf Größen enthalten oder nur eine oder eine beliebige Kombination.

Um eine Auswertung in dem Modul robuster gegen unbekannte Daten zu machen, ist der KI-Microcontroller ausgestaltet zur Auswertung ein Residual-Neural-Network in dem KI-Algorithmus zu nutzen. Vorzugsweise wird ein Residual-Network mit insgesamt 12 Convolutional-Layern eingesetzt, zwar weisen typische Residual-Neural-Network-Architekturen eine Tiefe von 18, 34, 50, 101 und 152 Convolutional-Layern auf, jedoch hat sich herausgestellt, dass 12 Layer für den gegebenen Anwendungsfall ausreichend sind, da das Modell innerhalb weniger Epochen konvergiert.

Um das Modul in einem Automatisierungsverbund vorteilhaft einzusetzen ist der Betriebssystem-Baustein ausgestaltet, dass der KI-Microcontroller und die Messeinheit über den Rückwandbus parametrierbar bzw. programmierbar sind.

Die Zeichnung zeigt ein Ausführungsbeispiel der Erfindung, dabei zeigt die

FIG 1    ein Modul ausgebildet zur sequenziellen Datenerfassung mit integrierter KI-Auswertung,

FIG 2    ein Array für Messreihen,

FIG 3    einen prinzipiellen Aufbau eines KI-Microcontrollers und

FIG 4    einen möglichen Ablauf für eine Initialisierung und einen Messablauf vom KI-Controller und der Messeinheit.

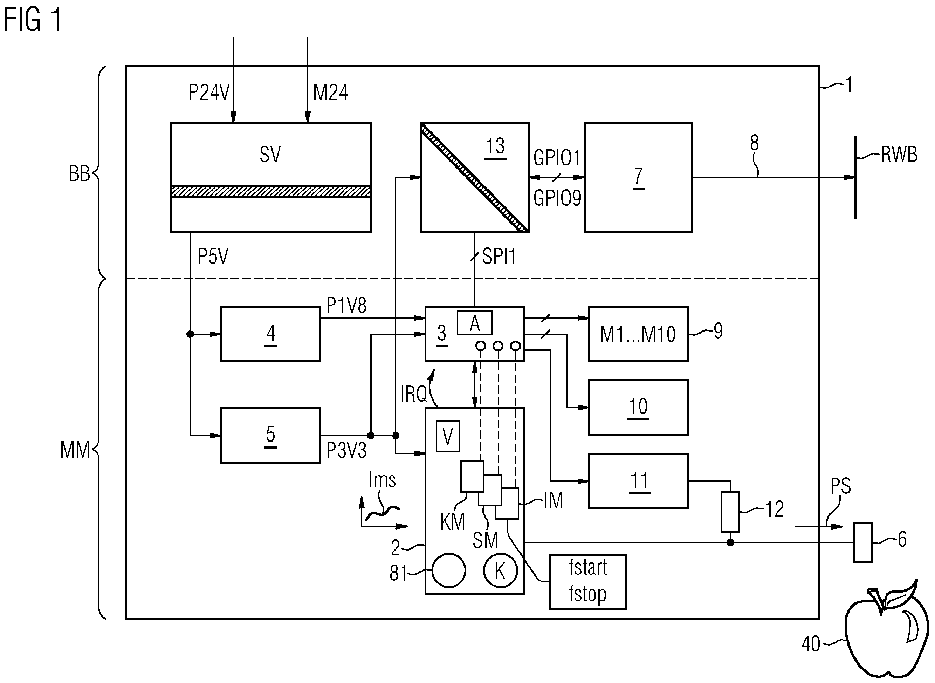

Gemäß FIG 1 ist ein Modul 1 zur sequentiellen Datenerfassung mit einer integrierten KI-Auswertung dargestellt. Das Modul 1 gliedert sich in ein Basisboard BB und ein Messmodul MM. Das Basismodul BM weist eine Stromversorgungseinheit SV auf, welche extern mit 24 Volt P24V und einen Masseanschluss M24 versorgt wird. Des Weiteren weist die Stromversorgungseinheit SV einen Spannungswandler auf, welcher eine konstante Spannung von 5 Volt ausgibt. Für allgemeine Steuerungs- und Koordinierungsaufgaben das Basisboard BB und das Messmodul MM betreffend, weist das Basisboard BB einen Betriebssystem-Baustein 7 auf. Der Betriebssystem-Baustein 7 ist zum einen an einen Rückwandbus-Anschluss 8 angeschlossen und zum anderen über interne Datenkommunikationsleitungen, beispielsweise GPIO1 bis GPIO9 (General Purpose Input Output) mit einem Trennungsbaustein 13 zur galvanischen Trennung der Signale verbunden. Der Trennungsbaustein 13 ist in diesem Fall als ein Magnetkoppler ausgestaltet. Der Rückwandbus-Anschluss 8 des Betriebssystem-Baustein 7 ist dementsprechend an einen Rückwandbus RWB angeschlossen. Der Rückwandbus RWB dient bei einem modular aufgebauten Automatisierungssystem zur Aufnahme von weiteren Modulen, Ein-/Ausgabebaugruppen, Technologiebaugruppen usw. darüber hinaus verbindet der Rückwandbus RWB die erwähnten Module mit einer übergeordneten speicherprogrammierbaren Steuerung.

Das in das Modul 1 integrierte Messmodul MM hat zum Basismodul zum einen eine Versorgungsspannungsverbindung P5V und zum anderen eine Datenverbindung SPI. Ein erster Spannungsregler 4 auf dem Messmodul MM stellt für die nachfolgenden Bausteine eine konstante Spannung von 1,8 Volt bereit. Ein zweiter Spannungsregler 5 stellt für die nachfolgenden Bausteine eine konstante Spannung von 3,3 Volt bereit.

Das Herzstück des Messmoduls MM ist ein freiprogrammierbarer KI-Controller 3 und eine ebenfalls frei programmierbare Messeinheit 2. Der KI-Microcontroller 3 und die Messeinheit 2 sind ebenfalls über interne Datenleitungen, nämlich SPI (Serial Peripheral Interface), miteinander verbunden. Die Messeinheit 2 ist ausgestaltet, über einen Sensor 6 von einem Testobjekt 40 Messwerte aufzunehmen. Der KI-Microcontroller 3 ist ausgestaltet einen KI-Algorithmus aufzunehmen und abzuspeichern. Ein Datenspeicher 9 kann dazu genutzt werden, Messreihen zwischenzuspeichern. Die Messeinheit 2 ist ausgestaltet eine Messvorschrift V mit zumindest folgenden Messparametern entgegenzunehmen. Eine Art KM, SM, IM der Messung, wobei KM einer Körperschallmessung entsprechen soll, SM einer Schwingungsmessung entsprechen soll, IM einer Impedanzmessung nach dem Prinzip der Impedanzspektroskopie entsprechen soll. Das bedeutet, über die vorgebbare Messvorschrift V kann die Messeinheit 2 für bestimmte Anwendungsfälle frei programmiert werden. Darüber hinaus wird der Messeinheit 2 eine Anzahl K der hintereinander durchzuführenden Messungen mitgeteilt. Der KI-Microcontroller 3 ist dabei dazu ausgestaltet zyklisch beginnend mit einer ersten Messreihe M1 diese von der Messeinheit 2 abzuholen und in einem Array A zu speichern. Die gestrichelten Linien zwischen dem KI-Microcontroller 3 und der Messeinheit 2 bedeuten, dass bei einer Programmierung beispielsweise für die Art KM, welcher einer Körperschallmessung entspricht, der KI-Microcontroller 3 und die Messeinheit 2 miteinander gemeinsam programmiert bzw. parametriert sind, um die entsprechende Wechselwirkung bei der Messung und Auswertung bezüglich der späteren Neuronalen Netze zusammenzuwirken.

Der KI-Microcontroller 3 ist dazu ausgestaltet, den KI-Algorithmus auf die Messwerte der ersten Messreihe M1 und natürlich auf die weiteren Messreihen anzuwenden und das Ergebnis mittels des Betriebssystembausteins 7 über den Rückwandbus RWB auszugeben. Als besonderer Vorteil bei dieser Ausgestaltung wird es angesehen, dass die KI-Auswertung direkt nach Aufnahme einer Messreihe in den KI-Microcontroller 3 durchgeführt wird. Dies ermöglicht eine schnelle, speichersparende sequenzielle Abarbeitung vor Ort. Weiterhin ist der KI-Microcontroller 3 ausgestaltet, nach Auswertung der ersten Messreihe M1 eine weitere Messreihe M2,...,M10 aus dem Array A mit dem KI-Algorithmus auszuwerten.

Von Vorteil ist es, dass der KI-Microcontroller 3 ausgestaltet ist, mittels einer Engineering Station für die jeweilige Art KM,SM,IM der Messung parametriert zu werden und somit für eine Körperschallmessung, eine Schwingungsmessung oder Impedanzmessung parametriert ist.

Für den Fall, dass der KI-Microcontroller 3 und die Messeinheit 2 für eine Impedanzmessung parametriert sind, ist die Messeinheit 2 ausgestaltet mit einem elektrischen Prüfsignal PS, welches auch von der Messeinheit generiert wird, eine von einer Frequenz und/oder einer Amplitude des Prüfsignals PS abhängige Messreihe bzw. ein Impedanzspektrum IMS über den Sensor 6 von dem Testobjekt 40 aufzunehmen. Die Messeinheit 2 bzw. die jetzt so parametrierte Impedanzmesseinheit ist ausgestaltet, mittels der Messvorschrift V mit einer Startfrequenz fstart zu beginnen und mit einer Stoppfrequenz fstopp zu enden und dadurch eine Anzahl K der gewünschten Messung aufzunehmen.

Eine Besonderheit in der Parametrierung der Messeinheit 2 liegt darin, dass die Impedanzmesseinheit und/oder auch der KI-Microcontroller 3 ausgestaltet sind, beginnend mit einem Wert eines Kalibrierwiderstandes 12 bzw. Rcal die Messung durzuführen und die gemessenen Daten auszuwerten, dabei wird verglichen ob die gemessene Impedanz kleiner als 80% des Kalibrierwiderstandes ist, sollte dies so sein, wird der Multiplexer 11 den nächstkleineren Kalibrierwiderstand zuschalten.

Um ausgehend von der Startfrequenz fstart bis zu einer Stoppfrequenz fstopp entsprechende Frequenzschritte zu erreichen, liegt in der Impedanzmesseinheit 2 noch eine Frequenz-Berechnungsformel 81 vor, welche logarithmische Frequenzschritte vorgibt, eine lineare Vorgabe wäre auch möglich.

$$f_{neu} = 10^{k \cdot \frac{log\left(\frac{f_{stop}}{f_{start}}\right)}{K-1}}$$

Des Weiteren verfügt das Messmodul MM über eine Speicherkarte 10 für zusätzliche Programme oder Aufnahme von Messdateien. Auch in einem zusätzlichen Datenspeicher 9 kann alternativ das Array A für die Messreihen M1,...,M10 abgelegt werden.

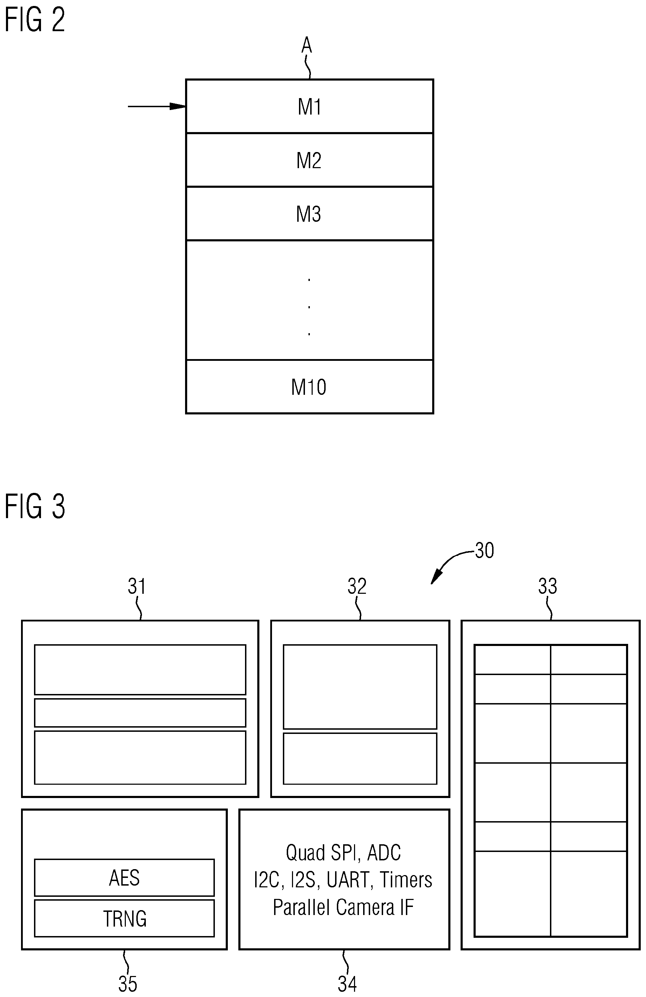

Die FIG 2 zeigt zur Verdeutlichung noch einmal das Array A in dem sequenziell hintereinander eine erste Messreihe M1, eine zweite Messreihe M2 bis zu einer zehnten Messreihe M10 abgelegt sind. Für eine abschließende Auswertung durch den KI-Microcontroller 3 kann nun geschickt sequenziell hintereinander das Array A abgearbeitet werden und Messreihe für Messreihe durch den KI-Algorithmus ausgewertet werden. Damit immer wieder eine neue Messreihe von der Messeinheit 2 in den KI-Microcontroller 3 und damit in das Array A gelangen kann, sagt die Messeinheit 2 über einen Interrupt IRQ dem KI-Microcontroller 3 bescheid, welcher sodann die auszuwertende Messreihe aus der Messeinheit abholt.

Mit der FIG 3 wird ein prinzipieller Aufbau des KI-Microcontrollers 3 gezeigt. Als Beispiel ist ein zusammenhängender Chip 30 dargestellt. Ein ON-Chip-Systemspeicher 32 mit 512 KB Flash und 128 KB SRAM stehen auf dem Chip 30 zur Verfügung. Kommunikationsschnittstellen 34 wie ein Quad SPI, ein I2S oder eine Kameraschnittstelle PCIF stehen ebenfalls zur Verfügung. Für einen niedrigen Energieverbrauch des Chips 31 weist dieser einen ARM Cortex M4F-M4 mit einer CPU für eine Systemsteuerung und eines Risk-V Prozessors für kundenspezifische Anwendungen auf. Um die Abarbeitung eines KI-Algorithmus schneller zu machen, weist der Chip 30 ebenfalls einen Beschleuniger 33 auf. Der Beschleuniger 33 wird auch CNN-Accelerator genannt und kann mehrere Prozessoren parallel betreiben auch kann er für die KI-Auswertung eine Vielzahl von Layern 32-64[3] aufnehmen. er kann eine Gewichtung aufnehmen, er weist eine maximale Anzahl von Ein- und Ausgangsgrößen auf usw..

Die primäre Komponente des KI-Microcontrollers 3 ist demnach der CNN-Beschleuniger. Dieser weist 64 Prozessoren auf, welche in vier Quadranten zu je 16 Prozessoren aufgeteilt sind. Jeder Prozessor ist mit einer eigenen Gewichtsspeicherinstanz verbunden, vier Prozessoren teilen sich eine Datenspeicherinstanz. Insgesamt verfügt jeder Quadrant über einen eigenen Daten-, Gewichts- und Biasspeicher. Der Datenspeicher für alle Quadranten kann wie in FIG 3 ähnlich dargestellt werden. Alle Eingangsdaten die in einem Neuronalen Netzwerk verarbeitet werden sollen, müssen in der jeweiligen Datenspeicherinstanz der entsprechenden Prozessoren gespeichert werden.

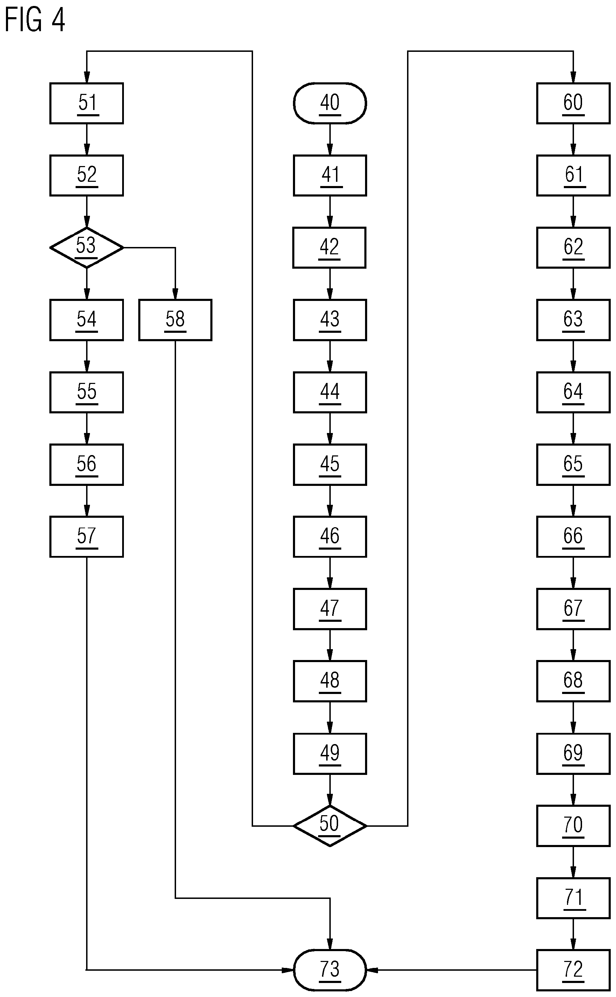

Die FIG 4 zeigt einen Programmablaufplan für eine mögliche Parametrierung und Messdurchführung des KI-Microcontrollers 3 und der Messeinheit 2. Beginnend mit dem Start 40 wird zunächst in einem Initialisierungsschritt 41 der KI-Microcontroller 3 programmiert. In einem weiteren Initialisierungsschritt 42 wird die Messeinheit 2 initialisiert. In einem dritten Initialisierungsschritt 43 wird zunächst in dem Beispiel für eine Impedanzmessung der größte Widerstand an dem Multiplexer 11 eingestellt. Dann wird der KI-Microcontroller 3 sozusagen hochgefahren und in einem vierten Schritt 44 wird der CNN-Beschleuniger eingeschaltet. In einem fünften Schritt 45 wird der CNN-Beschleuniger initialisiert. Danach werden in einem sechsten Schritt 46 die Gewichte in den Gewichtspeicher des CNN-Beschleunigers geladen. Auch werden die Bias in den Biasspeicher in einem siebten Schritt 47 geladen. Nun wird in einem achten Schritt 48 der CNN-Beschleuniger für ein gegebenes Modell konfiguriert. Jetzt ist der KI-Microcontroller 3 soweit Eingabedaten zu verarbeiten und in einem neunten Schritt 49 werden Eingabedaten geladen.

Über einen Non-Answer-Test 50 muss nun entschieden werden, ob mit einem Beispielsdatensatz oder mit dem Laden einer echten Messreihe gestartet wird. In dem Fall des Beispielsdatensatzes wird mit der Ausführung Laden des Beispielsdatensatzes 51 ein Beispieldatensatz geladen und es kann eine Auswertung des Beispieldatensatzes 52 gestartet werden. Anhand des Beispieldatensatzes wird durch eine Überprüfung 53 geprüft, ob die Verarbeitung und die Auswertung korrekt von statten geht, sollte dies der Fall sein, wird eine Inferenzausgabe 54 geladen und es wird in einem weiteren Schritt 55 eine Ausgabewahrscheinlichkeit berechnet. Daraufhin wird der CNN-Beschleuniger ausgeschaltet mit 56 und es wird ein Klassifikationsergebnis zur Anzeige 57 gebracht.

Für die Alternative, das ein echtes Messreihenarray geladen wird, wird dies mit dem Ladeschritt 60 geladen, daraufhin wird die Inferenz gestartet 61 und in einer Überprüfung 62 wird die Inferenzausgabe mit gegebenen Ergebnissen verglichen. Sollte dies geglückt sein, wird die Inferenzausgabe 63 geladen und es wird wiederum eine Ausgabewahrscheinlichkeit 64 berechnet. Daraufhin wird der CNN-Beschleuniger ausgeschaltet 65 und es werden die Klassifikationsergebnisse 66 zur Anzeige gebracht. Die Messeinheit 2 kann nun initialisiert werden und erneut Messergebnisse in das Array A mit dem Schritt 68 schreiben. Es wird eine Skalierung 69 auf ein Array A von -128 bis +127 durchgeführt. Daraufhin kann wieder in den KI-Microcontroller 3 mit dem Schritt Ermittlung 70 die Klasse klassifiziert werden. Nun ist es wichtig, dass in dem Schritt 71 die Ergebnisse in einen Puffer geschrieben werden und damit kann der Betriebssystembaustein 7 diese in einem Ausleseschritt 72 auslesen und auf dem Rückwandbus RWB zur Verfügung stellen. Mit dem Ende 73 ist ein Messvorgang abgeschlossen.

**Patentansprüche**

1. Modul (1) ausgebildet zur sequenziellen Datenerfassung mit integrierter KI-Auswertung umfassend

    eine Messeinheit (2), die ausgestaltet ist, über einen Sensor (6) von einem Testobjekt (40) Messwerte aufzunehmen,
    einen KI-Microcontroller (3), der ausgestaltet ist, einen KI-Algorithmus aufzunehmen und abzuarbeiten,
    einen Datenspeicher (9),
    einen Betriebssystembaustein (7),
    wobei das Modul ausgestaltet ist, für eine modulare Aufbauweise in einem Automatisierungssystem und um Daten über einen Rückwandbus (RWB) an eine übergeordnete Einheit weiterzuleiten,
    **dadurch gekennzeichnet, dass**
    die Messeinheit (2) ausgestaltet ist eine Messvorschrift (V) mit zumindest folgenden Messparametern entgegenzunehmen:

    eine Art (KM,SM,IM) der Messung,
    eine Anzahl (K) der gewünschten Messungen, wobei die Messeinheit (2) weiterhin ausgestaltet ist, gemäß der vorgegebenen Art der Messung (KM,SM,IM) die Anzahl (K) der Messungen hintereinander durchzuführen und eine Messreihe (Mi) aufzunehmen, wobei der KI-Microcontroller (3) weiterhin ausgestaltet ist, zyklisch beginnend mit einer ersten Messreihe (M1) diese von der Messeinheit (2) abzuholen und in einem Array (A) zu speichern, den KI-Algorithmus auf die Messwerte der ersten Messreihe (M1) anzuwenden,
    das Ergebnis mittels des Betriebssystembaustein (7) über den Rückwandbus (RWB) auszugeben, und nach Auswertung der ersten Messreihe (M1) eine weitere Messreihe (M2,...,M10) aus dem Array (A) mit dem KI-Algorithmus auszuwerten.

2. Modul (1) nach Anspruch 1, wobei die Messeinheit (2) und der KI-Microcontroller (3) ausgestaltet sind, mittels einer Engineering Station für die jeweilige Art (KM,SM,IM) der Messung parametriert zu werden, so dass sie dann für eine Körperschallmessung, eine Schwingungsmessung oder eine Impedanzmessung parametriert sind.

3. Modul (1) nach Anspruch 1 oder 2, wobei bei einer Parametrierung für eine Impedanzmessung die Messeinheit (2) als eine Impedanzmesseinheit ausgestaltet ist und mit einem elektrischen Prüfsignal (PS) eine von einer Frequenz und/oder einer Amplitude des Prüfsignals (PS) abhängige Messreihe bzw. ein Impedanzspektrum (ImS) über den Sensor (6) von dem Testobjekt (40) aufnimmt, dabei ist die Impedanzmesseinheit ausgestaltet mittels der Messvorschrift (V) mit einer Startfrequenz (fstart) zu beginnen und mit einer Stoppfrequenz (fstop) zu enden und dadurch eine Anzahl (K) der gewünschten Messungen aufzunehmen.

4. Modul (1) nach Anspruch 3, aufweisend einen Multiplexer (11), wobei die Impedanzmesseinheit oder der KI-Microcontroller (3) ausgestaltet ist beginnend mit einem Wert eines Kalibrierwiderstandes (Rcal) die Messung durchzuführen und die gemessenen Daten auszuwerten, dabei wird verglichen, ob die gemessene Impedanz kleiner als 80% des Kalibrierwiderstandes ist, sollte dies so sein, wird der Multiplexer den nächst kleineren Kalibrierwiderstande zuschalten.

5. Modul (1) nach Anspruch 3 oder 4, wobei der KI-Microcontroller (3) ausgestaltet ist den KI-Algorithmus auf einen Imaginärteil der Messwerte der Messreihen anzuwenden.

6. Modul (1) nach einem der Ansprüche 1 bis 5, wobei der KI-Microcontroller (3) ausgestaltet ist zur Auswertung des KI-Algorithmus ein Residual-Neural-Network zu nutzen.

7. Modul (1) nach einem der Ansprüche 1 bis 6, wobei der Betriebssystem-Baustein (7) ausgestaltet ist, dass der KI-Microcontroller (3) und die Messeinheit (2) über den Rückwandbus (RWB) parametrierbar bzw. programmierbar sind.

**Claims**

1.  Module (1) designed for sequential data acquisition with integrated AI evaluation comprising

    a measuring unit (2) designed to acquire measured values from a test object (40) via a sensor (6),
    an AI microcontroller (3) designed to acquire and process an AI algorithm,
    a data memory (9),
    an operating system module (7),
    wherein the module is designed for a modular structure in an automation system and to forward data to a higher-level unit via a backplane bus (RWB),
    **characterised in that**
    the measuring unit (2) is designed to accept a measuring instruction (V) containing at least the following measurement parameters:

    a type (KM,SM,IM) of measurement,
    a number (K) of the desired measurements, wherein the measuring unit (2) is further designed in accordance with the specified type of measurement (KM,SM,IM) to perform the number (K) of the measurements one after the other and to acquire a series of measurements (Mi), wherein the AI microcontroller (3) is further designed, starting with a first series of measurements (M1), to retrieve these cyclically from the measuring unit (2) and to store them in an array (A); to apply the AI algorithm to the measured values of the first series of measurements (M1), to output the result by means of the operating system module (7) via the backplane bus (RWB) and after evaluation of the first series of measurements (M1), to evaluate a further series of measurements (M2,...,M10) from the array (A) with the AI algorithm.

2.  Module (1) according to claim 1, wherein the measuring unit (2) and the AI microcontroller (3) are designed to be parameterised by means of an engineering station for the respective type (KM,SM,IM) of measurement so that they are then parameterised for a structure-borne sound measurement, a vibration measurement or an impedance measurement.

3.  Module (1) according to claim 1 or 2, wherein in a parameterisation for an impedance measurement the measuring unit (2) is designed as an impedance measurement unit and can thus use an electrical test signal (PS) to acquire a series of measurements or an impedance spectrum (ImS) dependent on a frequency and/or an amplitude of the test signal (PS) from the test object (40) via the sensor (6); in this case the impedance measurement unit is designed to start, by means of the measuring instruction (V), with a start frequency (fstart) and to stop with a stop frequency (fstop) and thereby to acquire a number (K) of the desired measurements.

4.  Module (1) according to claim 3, having a multiplexer (11), wherein the impedance measurement unit or the AI microcontroller (3) is designed, starting with a value of a calibration resistance (Rcal), to perform the measurement and to evaluate the measured data, and to compare whether the measured impedance is less than 80% of the calibration resistance; if so, the multiplexer will switch in the next smallest calibration resistance.

5.  Module (1) according to claim 3 or 4, wherein the AI microcontroller (3) is designed to apply the AI algorithm to an imaginary part of the measured values of the series of measurements.

6.  Module (1) according to one of claims 1 to 5, wherein the AI microcontroller (3) is designed to use a residual neural network for the evaluation of the AI algorithm.

7.  Module (1) according to one of claims 1 to 6, wherein the operating system module (7) is designed so that the AI microcontroller (3) and the measuring unit (2) can be parameterised or programmed via the backplane bus (RWB).

**Revendications**

1.  Module (1) constitué pour la saisie séquentielle de données avec évaluation d'IA intégrée comprenant

    une unité (2) de mesure, qui est conformée pour enregistrer des valeurs de mesure par un capteur (6) d'un objet (40) de test, une micro-unité (3) d'IA, qui est conformée pour enregistrer et élaborer un algorithme d'IA,
    une mémoire (9) de données,
    un module (7) de système de fonctionnement, dans lequel le module est conformé pour un mode de construction modulaire dans un système d'automatisation et pour acheminer des données à une unité supérieure hiérarchiquement en passant par un bus (RWB) de paroi arrière,
    **caractérisé en ce que**
    l'unité (2) de mesure est conformée pour recevoir une prescription (V) de mesure ayant au moins les paramètres de mesure suivants :

    un type (KM, SM, IM) de la mesure,

un nombre (K) des mesures souhaitées, dans lequel l'unité (2) de mesure est conformée en outre pour effectuer, suivant le type donné à l'avance de la mesure (KM, SM, IM), le nombre (K) des mesures les unes derrière les autres et pour enregistrer une série (Mi) de mesures, dans lequel l'unité (3) de commande d'IA est conformée en outre pour,

en commençant cycliquement avec une première série (M1) de mesures, aller chercher celle-ci par l'unité (2) de mesure et la mettre en mémoire dans un réseau (A),

appliquer l'algorithme d'IA aux valeurs de mesure de la première série (M1) de mesures,

émettre le résultat au moyen du module (7) de système de fonctionnement en passant par le bus (RWB) de paroi arrière et, après évaluation de la première série (M1) de mesures, évaluer une autre série (M2, **...,** M10) de mesures du réseau (A) par l'algorithme d'IA.

2. Module (1) suivant la revendication 1, dans lequel l'unité (2) de mesure et la micro-unité (3) de commande sont conformées pour, au moyen d'une engineering station, être paramétrées pour le type (KM, SM, IM) respectif de la mesure, de manière à ce qu'elles soient alors paramétrées, pour une mesure de bruit de corps, une mesure de vibration ou une mesure d'impédance.

3. Module (1) suivant la revendication 1 ou 2, dans lequel, lors d'un paramétrage pour une mesure d'impédance, l'unité (2) de mesure est conformée sous la forme d'une unité de mesure d'impédance et reçoit, par un signal (PS) électrique de contrôle, de l'objet (40) de test en passant par le capteur (6), une série de mesures, en fonction d'une fréquence et/ou d'une amplitude du signal (PS) de commande, ou respectivement un spectre (ImS) d'impédance, l'unité de mesure d'impédance étant conformée pour commencer, au moyen de la prescription (V) de mesure, avec une séquence (fstrart) de début et pour finir avec une fréquence (fstop) de fin et enregistrer ainsi un nombre (K) des mesures souhaitées.

4. Module (1) suivant la revendication 3, comportant un multiplexeur (11), dans lequel l'unité de mesure d'impédance ou la micro-unité (3) de commande d'IA est conformée pour effectuer la mesure en commençant avec une valeur d'une résistance (Rcal) d'étalonnage et pour évaluer les données mesurées, à cet égard en comparant si l'impédance mesurée représente moins de 80 % de la résistance d'étalonnage, s'il en est ainsi le multiplexeur est branché aux résistances d'étalonnage les plus petites suivantes.

5. Module (1) suivant la revendication 3 ou 4, dans lequel la micro-unité (3) de commande d'IA est conformée pour appliquer l'algorithme d'IA à une partie imaginaire des valeurs de mesure de la série de mesures.

6. Module (1) suivant l'une des revendications 1 à 5, dans lequel la micro-unité (3) de commande d'IA est conformée pour utiliser un réseau neuronal résiduel pour l'évaluation de l'algorithme d'IA.

7. Module (1) suivant l'une des revendications 1 à 6, dans lequel le module (7) de système de fonctionnement est conformé de manière à ce que la micro-unité (3) de commande d'IA et l'unité (2) de mesure puissent être paramétrées et respectivement programmées en passant par le bus (RWB) de paroi arrière.

FIG 1

EP 4 506 765 B1

FIG 2

A

M1

M2

M3

.
.
.

M10

FIG 3

30

31

32

33

AES

TRNG

Quad SPI, ADC
I2C, I2S, UART, Timers
Parallel Camera IF

35

34

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2021263493 A
- DE 102021210298 A1

- US 2021263493 A1